# EUROPÄISCHE PATENTANMELDUNG

(11) **EP 1 862 236 A1**
(43) Veröffentlichungstag der Anmeldung: **05.12.2007**
(21) Anmeldenummer: 07009502.1
(22) Anmeldetag: 11.05.2007
(51) Int. Cl.: B21D 24/12

(54) **Zieheinrichtung mit hydrostatischer Spindellagerung**

(30) Priorität: 31.05.2006 DE 102006025271
(71) Anmelder: Schuler Pressen GmbH & Co. KG, 73033 Göppingen (DE)
(72) Erfinder: Schmeink, Martin, 73084 Salach (DE); Wall, Johannes, 73037 Göppingen (DE)
(74) Vertreter: Rüger, Barthelt & Abel Patentanwälte

(57) **Zusammenfassung**

Eine Tiefziehpresse (1) weist ein Ziehkissen (17) auf, das durch Spindelgewindetriebe (18, 19) von Servomotoren (24, 25) oder ähnlichen Antrieben mit einer der Stößelbewegung entgegen gerichteten Kraft beaufschlagbar ist. Die Spindelgewindetriebe (18, 19) sind mit hydrostatischen Lagereinrichtungen (38) zur Lagerung der jeweiligen Spindelmutter (22) auf der jeweiligen Gewindespindel (20) versehen.

## Beschreibung

Die Erfindung betrifft eine Zieheinrichtung, bei der eine der Bewegung des Stößels einer Tiefziehpresse entgegen gerichtete Kraft erzeugt und mittels einer Gewindespindel auf eine Komponente des Werkzeugs übertragen wird.

Derartige Zieheinrichtungen sind beispielsweise aus der DE 102 00 5026 818 A1 oder auch aus der DE 198 211 59 A1 bekannt. Diese Druckschriften offenbaren Ziehkissenvorrichtungen mit einem Ziehkissen in Form einer horizontal angeordneten steifen Platte oder eines Druckkastens, der von unten her über Gewindespindeln mit einer nach oben gerichteten Kraft beaufschlagt ist. Oben stehen auf dem Ziehkissen Druckstifte, die einen Blechhaltering abstützen, die Gewindespindeln werden über Servomotoren angetrieben und stehen mit Gewindemuttern in Eingriff, die sich an dem Ziehkissen abstützen. Die Servomotoren sind an einem entsprechenden Träger ortsfest angeordnet und drehen die Gewindespindel.

Zur Verringerung der Reibung kommen für solche Antriebe prinzipiell Kugelgewindetriebe in Frage. Diese sind jedoch in der Kraft beschränkt, die sie aufbringen können. Außerdem ist eine gewisse Stoßempfindlichkeit zu verzeichnen, was beim Aufsetzen des Oberwerkzeugs auf dem Blech und dem Blechhaltering und den sich ergebenden stoßartigen Belastungen zu Schwierigkeiten führen kann.

Davon ausgehend ist es Aufgabe der Erfindung, eine verbesserte Zieheinrichtung zu schaffen.

Diese Aufgabe wird mit der verbesserten Zieheinrichtung gemäß Anspruch 1 gelöst:
Die erfindungsgemäße Zieheinrichtung weist einen Spindelgewindetrieb auf, der zur Kraftbeaufschlagung einer Komponente des Tiefziehwerkzeugs dient. Eine solche Komponente ist beispielsweise der Blechhalterring des Tiefziehwerkzeugs. Dieser stützt sich über Druckstifte auf einem Ziehkissen ab, das auch als Druckplatte, als Druckkasten oder ähnliches bezeichnet wird. Der Spindelgewindetrieb drückt diesen Druckkasten dem Stößel entgegen. Erfindungsgemäß ist der Spindelgewindetrieb mit einer hydrostatischen Lagereinrichtung versehen. Die Gewindemutter eines solchen Spindelgewindetriebs ist über ein hydraulisches Druckpolster an den Gewindegängen der Gewindespindel abgestützt. An den Wirkflächen der Gewindemutter und der Gewindespindel ergibt sich ein dünnes Ölpolster bei einem Spaltmaß von beispielsweise 0,03 bis 0,05 mm. Die hydrostatische Lagerung weist eine hohe Steifigkeit und gleichzeitig eine gute Dämpfung auf.

Als Antriebseinrichtung wird vorzugsweise für jede Gewindespindel ein Servomotor vorgesehen. Es zeigt sich, dass die hydrostatische Spindellagerung, insbesondere unter Last, eine besonders niedrige Reibung aufweist und somit sowohl eine verbesserte Energierückgewinnung als auch eine verbesserte Regelgüte gestattet. Das durch den Spindelgewindetrieb gebildete Kraftübertragungssystem ist steifer als herkömmliche Kugelumlauf- oder Planetenrollspindeln. Außerdem wird unter Last ein höherer Wirkungsgrad von im schlechtesten Fall ca. 90 % erreicht, was mit bisherigen Lösungen nicht möglich war. Außerdem ist die erfindungsgemäße Zieheinrichtung relativ stoßunempfindlich und somit robust.

Der Servomotor ist vorzugsweise ein elektrischer Servomotor, der sowohl im Motor- als auch im Generatorbetrieb arbeiten kann. Es ist eine Energierückspeisung in andere Servomotoren und insbesondere in einen Energiespeicher, wie beispielsweise einen Schwungradspeicher möglich, um eine Energierückspeisung in das Versorgungsnetz zu vermeiden. Dadurch wird eine Verschlechterung der Netzqualität vermieden.

Der Servomotor ist vorzugsweise als Torquemotor ausgebildet, d.h. er erzeugt ein vorgegebenes Drehmoment. Bedarfsweise ist es auch möglich, ihn positionsgesteuert zu betreiben. Der Servomotor kann somit zur Vorbeschleunigung der Gewindespindel dienen, bevor das Oberwerkzeug auf dem Blechteil aufsetzt und beginnt, den Blechhaltering nach unten zu drücken. Nach Durchführung der Vorbeschleunigung kann der Servomotor drehmoment- oder kraftgeregelt arbeiten.

Bei einer bevorzugten Ausführungsform ist die Gewindespindel wenigstens um ein gewisses Maß kippbar oder schwenkbar angebracht. Sie kann vorzugsweise um mindestens eine oder auch um mehrere Achsen schwenken, um Neige- oder Kippbewegungen des Druckkastens zu folgen. Z.B. kann die Gewindespindel um einige Grad schwenkbar an einem Träger gelagert sein, der auch den Servomotor trägt. Der Motor kann z.B. ebenfalls schwenkbar gelagert oder alternativ ruhend gelagert und über eine Biegewelle oder Gelenkwelle an die Gewindespindel angeschlossen sein. Die Gewindemutter kann über eine Drehmomentstütze mit dem Träger verbunden sein, und so die Ausgleichsbewegung der Gewindespindel, d.h. ihre Schrägstellung nachvollziehen. Die Gewindemutter kann an dem Druckkasten geringfügig schwenkbar und/oder zumindest etwas seitlich verschiebbar gelagert sein. Die Gewindemutter ist dabei vorzugsweise über ein Druckrohr mit dem Druckkasten verbunden. Die Gewindespindel erstreckt sich durch das Druckrohr und ist von diesem abgedeckt und geschützt. Die Gewindespindel ist an dem Druckrohr vorzugsweise über eine Überlastsicherung und ggf. um ein geringes Maß, z.B. Bruchteile eines Grads oder wenige Grad, schwenkbar gelagert. Letzteres verhindert ein Verklemmen von Gewindespindel und Gewindemutter, wenn der Druckkasten eine Kippbewegung erfährt.

Durch die schwenkbare Spindelanordnung werden diese lediglich auf Druck, nicht aber auf Biegung beansprucht. Auf die Spindel wirken keine von dem Druckkasten herrührende Biege- oder Kippmomente ein. Dies maximiert die von dem Spindelgewindetrieb aufbringbare Kraft.

Die Überlastsicherung ist vorzugsweise eine hydraulische Einrichtung, beispielsweise in Form eines ringförmigen Hydraulikzylinders, der mit unter geringem Druck stehendem Hydraulikfluid gefüllt ist. Der Arbeitsraum dieses Hydraulikzylinders ist mit einem Überdruckventil verbunden, das bei Überschreiten der Nennkraft des Spindelgewindetriebs, z.B. bei Versagen der Vorbeschleunigung durch den Servomotor den Druck und damit die Spindelkraft begrenzt. Der Weg des Druckkastens bzw. Ziehkissens ist so dimensioniert, dass bei dieser Kraft die Gewindespindel und der Servomotor durch das entsprechende Drehmoment auf die Stößelgeschwindigkeit beschleunigt werden. Der in der Überlastsicherung vorhandene Druck wird, im Gegensatz zu sonst in der Technik angewendeten Überlastsicherungen, insbesondere Stößelüberlastsicherungen, auf seinem Sollwert gehalten, um die Beschleunigung der Gewindespindel zu ermöglichen.

Außerdem kann die Überlastsicherung dazu genutzt werden, um über einen Druckaufnehmer die über die Gewindespindeleinheit aufgebrachte Kraft zu messen. Zugleich kann der Strom des Servomotors überwacht werden, der ebenfalls einer von der Gewindespindeleinheit aufgebrachten Kraft entspricht. Eine Regelschleife kann den Motorstrom anhand des an der hydraulischen Überlastsicherung erfassten Drucks und somit der tatsächlich aufgebrachten Kraft regeln. Dadurch ergibt sich im Gegensatz zu anderweitigen Regelungen des Motorstroms eine verbesserte Kraftregelung. Außerdem ist das System einfach aufgebaut. Alternativ kann die Presskraft bzw. Kraft des Ziehkissens über eine Messung an dem Druckkasten oder anderen kraftübertragenden Elementen erfolgen, was aber aufwendiger ist.

Der Kolben der Überlastsicherung ist in einer Ausführungsform nur linear bewegbar in einem Zylinder geführt. Schwenkbewegungen der Gewindespindel werden durch eine entsprechende Lagereinrichtung ermöglicht, über die sich die Gewindespindel an der Überlastsicherung abstützt. Die Lagereinrichtung umfasst z.B. zwei in Axialrichtung (Vertikalrichtung) aneinanderliegende Elemente mit sphärisch gewölbten Anlageflächen. Bei einer alternativen Ausführungsform ist der Kolben der Überlastsicherung in gewissem, d.h. ausreichendem Maße schwenkbar, z.B. durch entsprechende Auslegung seiner Dichtung (en). Die Lagereinrichtung mit den sphärischen Anlageflächen kann dann entfallen.

Weitere Einzelheiten vorteilhafter Ausführungsformen der Erfindung ergeben sich aus Ansprüchen, aus der Zeichnung oder der Beschreibung. In der Zeichnung ist ein Ausführungsbeispiel der Erfindung veranschaulicht. Es zeigen:
- Figur 1: eine Ziehpresse in schematisierter, grob vereinfachter Darstellung,
- Figur 2: die Zieheinrichtung der Tiefziehpresse nach Figur 1 in quer geschnittener Darstellung, geschnitten entlang der Linie A-A in Figur 3,
- Figur 3: das Ziehkissen nach Figur 2 in horizontal geschnittener Darstellung,
- Figur 4: das Ziehkissen nach Figur 2 und 3 geschnitten entlang der Linie B-B in Figur 3,
- Figur 5: die hydrostatische Lagereinrichtung der Gewindespindel und Gewindemutter in teilweise geschnittener Darstellung,
- Figur 6: die Spindelmutter und ihre Überlastsicherung in schematisierter Darstellung,
- Figur 7: das Energiemanagementsystem der Presse nach Figur 1 als schematisiertes Übersichtsbild und
- Figur 8: eine abgewandelte Ausführungsform der Spindellagerung und des Spindelantriebs.

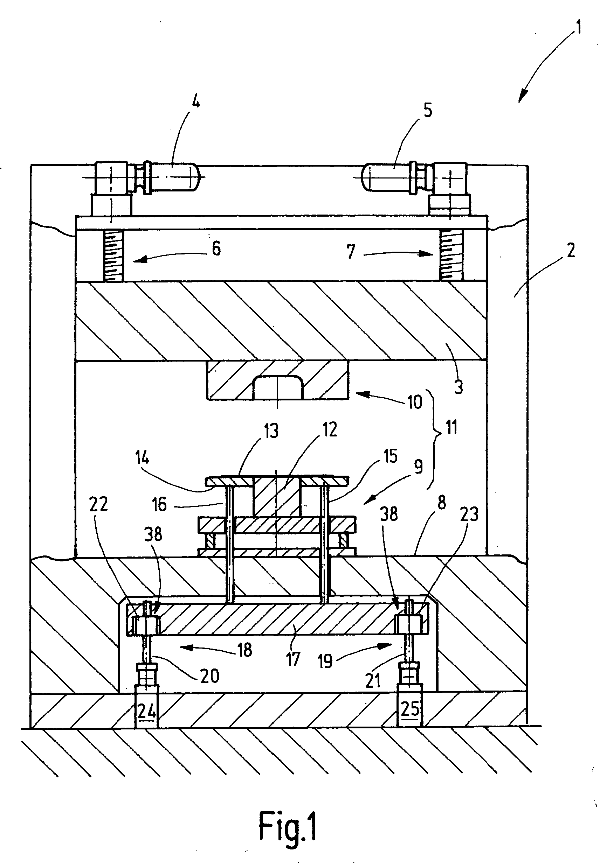

In Figur 1 ist eine Tiefziehpresse 1 schematisiert veranschaulicht, deren in einem Pressengestell 2 vertikal auf und ab verfahrbar gelagerter Stößel 3 über zumindest einen, vorzugsweise zwei oder mehrere Servomotoren 4, 5 angetrieben ist. Die Servomotoren 4, 5 arbeiten über Spindelgewindetriebe 6, 7 auf den Stößel 3. Die Servomotoren 4, 5 sind an einem oberen Teil des Pressengestells 2 ortsfest gelagert. Zu dem Pressengestell 2 gehört außerdem ein Pressentisch 8, der einen unteren Werkzeugteil 9 trägt. Zu diesem gehört ein oberer Werkzeugteil 10, der von dem Stößel 3 getragen ist. Die beiden Werkzeugteile 9, 10 bilden gemeinsam das Tiefziehwerkzeug 11.

Zu dem unteren Werkzeugteil 9 gehört ein ortsfest gelagertes Werkzeugteil 12 als Formteil zur ersten Formgebung einer bis dahin ebenen Platine 13. Zu dem Werkzeugteil 9 gehört außerdem ein Blechhaltering 14, der vertikal verstellbar gehalten ist. Dazu dienen Druckstifte 15, 16, die den unteren Werkzeugteil 9 sowie den Pressentisch 8 durchsetzen und mit ihren unteren Enden auf einem Druckkasten 17 stehen, der auch als Ziehkissen bezeichnet wird.

Der Druckkasten 17 fährt den Blechhaltering 14 bei einem Pressvorgang kontrolliert nach unten, wobei er den Blechhaltering 14 gegen die Platine 13 und somit die Platine 13 gegen das Oberwerkzeug 10 presst, wenn der Stößel 3 seinen Arbeitshub vollführt. Um den Druckkasten 17 mit einer der Bewegungsrichtung des Stößels 3 entgegen gerichteten Kraft zu beaufschlagen, sind Spindelgewindetriebe 18, 19 vorgesehen, zu denen jeweils eine Gewindespindel 20, 21 und eine Gewindemutter 22, 23 gehören. Die Gewindespindeln 20, 21 werden über Servomotoren 24, 25 angetrieben.

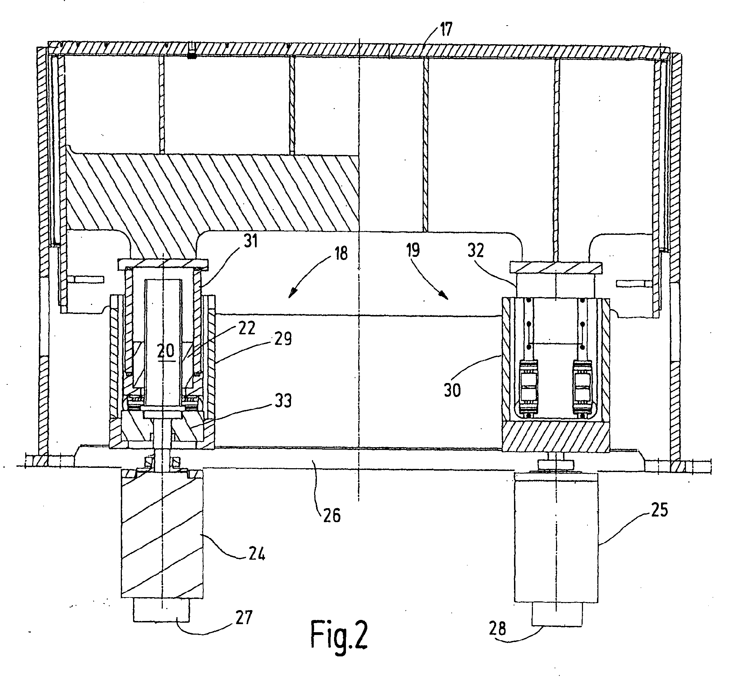

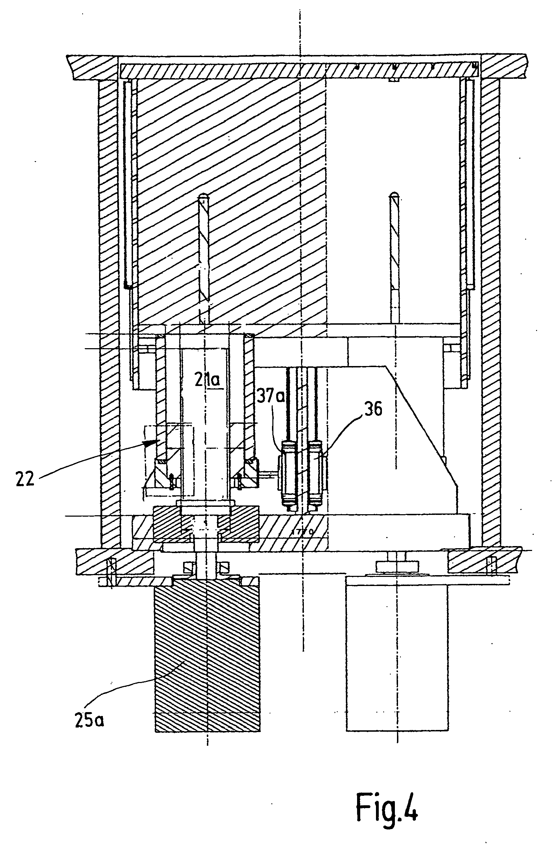

Die Figuren 2 bis 4 veranschaulichen den Druckkasten 17 und die Spindelgewindetriebe 18, 19 näher. Die beiden Servomotoren 24, 25 sitzen auf einer gemeinsamen Brücke, die einen Träger 26 bildet. Während die Servomotoren 24, 25 und mit ihnen verbundene Bremsen 27, 28 unterhalb des Trägers 26 angeordnet sind, ragen nach oben Teleskoprohre 29, 30 von dem Träger 26 weg. In diese tauchen axial druckbeanspruchte Rohre 31, 32 ein, die an ihrem unteren Ende jeweils die Spindelmutter 22, 23 tragen. Dagegen ist die Gewindespindel 20, 21, wie Figur 2 anhand der Gewindespindel 20 zeigt, durch ein axiales Drucklager 33 in Axialrichtung abgestützt.

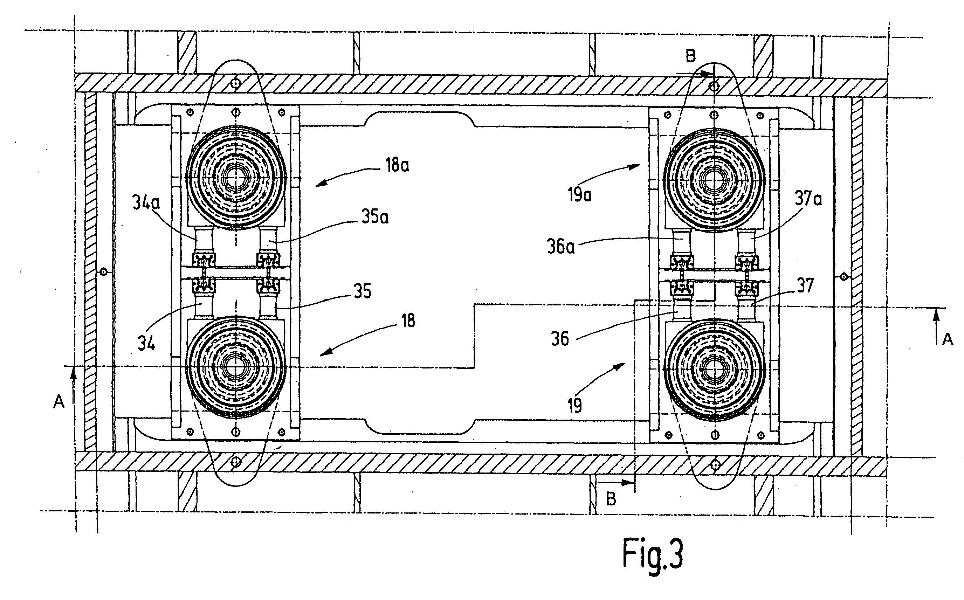

Wie aus Figur 3 hervorgeht, sind zusätzlich zu den Spindelgewindetrieben 18, 19 weitere Spindelgewindetriebe 18a, 19a vorgesehen, die mit den vorbeschriebenen Spindelgewindetrieben baugleich oder zu diesen gespiegelt sind. Alle Spindelgewindetriebe 18, 19, 18a, 19a weisen Gewindemuttern auf, die über Ausleger 34, 35, 34a, 35a, 36, 37, 36a, 37amit Schlitten verbunden sind, die zu Vertikalführungen gehören. Diese Ausleger 34 bis 37a dienen zur Abstützung des auf die Gewindemuttern einwirkenden Drehmoments.

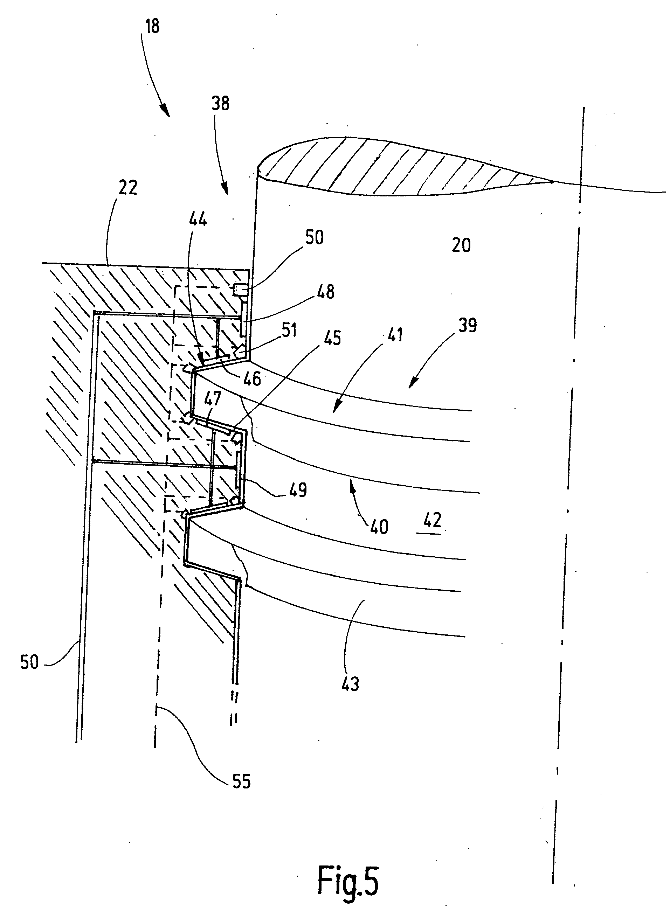

Figur 5 veranschaulicht die Gewindemutter 22 und die Gewindespindel 20 beispielhaft und stellvertretend für alle anderen Spindelgewindetriebe, die im Wesentlichen gleich aufgebaut sind. Wie der Spindelgewindetrieb 18 weisen alle diese Spindelgewindetriebe eine hydrostatische Lagereinrichtung 38 auf, durch die die Gewindemutter 22 an der Gewindespindel 20 gewissermaßen schwebend gehalten ist. Die Gewindespindel 20 weist ein zumindest eingängiges Gewinde 39 auf, das z.B. als Trapezgewinde ausgebildet sein kann. Es weist Gewindeflanken 40, 41 auf. Zwischen den Windungen des Gewindes 39 sind zylindrische Flächenabschnitte 42 angeordnet. Die Gewindegänge schließen außen ebenfalls mit einer einem Zylinder folgenden Fläche 43 ab.

Die Gewindemutter 22 weist ein passendes Innengewinde auf, dessen Flanken 44, 45 mit Taschen 46, 47 versehen sind. Außerdem kann die Wandung der Bohrung der Gewindemutter 22 mit entsprechenden Taschen 48, 49 versehen sein, die der Zylinderfläche 42 zugeordnet sind. Ergänzend oder alternativ können nicht weiter veranschaulichte Taschen an dem Boden der Gewindegänge der Gewindemutter 22 angeordnet sein, die der Fläche 43 zugeordnet sind. Alle diese Taschen 46 bis 49 sind über einen Kanal 50 mit unter Druck stehendem Öl beaufschlagt. Die Gewindemutter 22 definiert mit der Gewindespindel 20 insbesondere um jede der Taschen 46 bis 49 herum einen engen Spalt. In Nachbarschaft der Taschen 46 bis 49 sind Ölfangkanäle 50, 51 sowie weitere vorgesehen, aus denen Öl über einen Kanal 55 abgeführt wird.

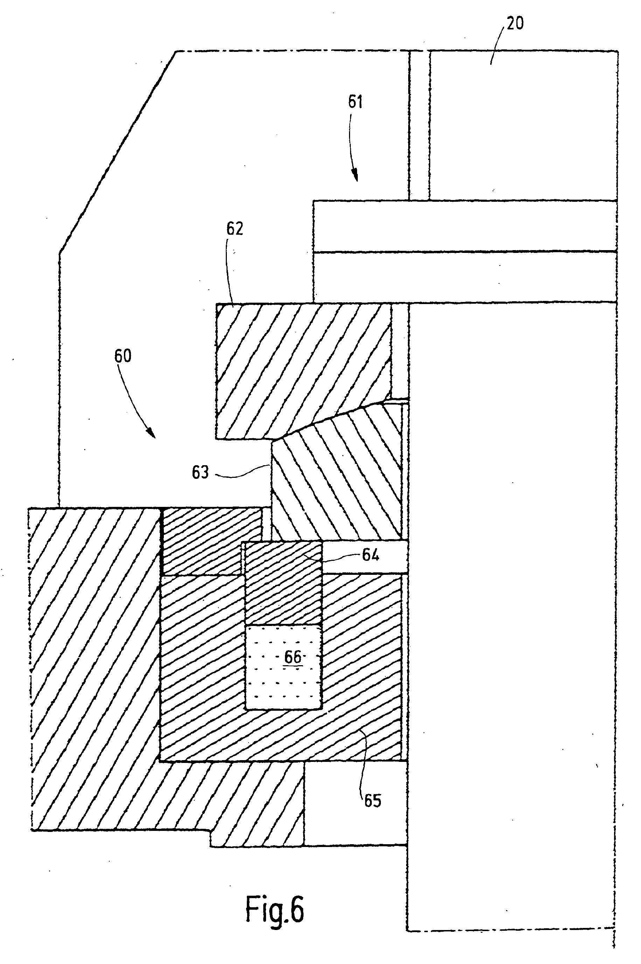

Figur 6 veranschaulicht die schwenkbare Lagerung der Gewindespindel 20 an einer hydraulischen Krafterfassungseinrichtung 60. Die Gewindespindel 20 ist an einem Axiallager 61 axial abgestützt. Das Axiallager 61 stützt sich auf einem Ring 62 ab, der auf einem weiteren Ring 63 lagert. Die beiden Ringe 62, 63 berühren einander an einer sphärischen Fläche und sind deshalb gegen einander verschiebbar.

Alternativ kann bei der in Figur 6 veranschaulichten Konfiguration das Element 61 durch einen an der Gewindespindel 20 vorgesehenen Bund gebildet sein. Die Ringe 62, 63 bilden dann ein Lager mit nicht weiter veranschaulichten zwischen ihnen angeordneten Wälzkörpern oder dergleichen.

Unabhängig davon stützt sich der Ring 63 auf einem hydraulischen Ringkolben 64 ab, der in einem Ringzylinder 65 sitzt und mit diesem einen Arbeitsraum 66 definiert. Der Arbeitsraum 66 ist mit Hydraulikfluid gefüllt. Ein nicht weiter veranschaulichtes Überlastventil dient dazu, den Druck in dem Arbeitsraum 66 zu begrenzen.

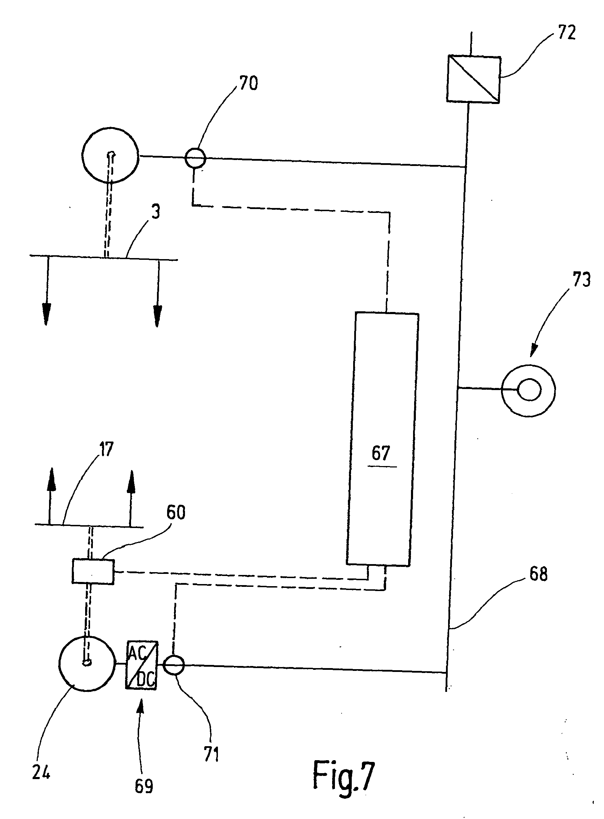

Wie Figur 7 schematisch veranschaulicht, ist die Überlastsicherung 60 in dem Kraftweg zwischen dem Servomotor 24 und dem Druckkasten 17 angeordnet. Über einen Drucksensor kann der Druck des Arbeitsraums 66 erfasst und an eine Steuereinheit 67 gemeldet werden. Die Steuereinheit 67 kann außerdem die aus einem Gleichspannungszwischenkreis 68 über einen Wechselrichter 69 an den Servomotor 24 gelieferte elektrische Leistung oder den an den Servomotor 24 gelieferten oder von diesem zurück gelieferten elektrischen Strom erfassen. An den Gleichspannungszwischenkreis 38 kann außerdem über einen nicht weiter veranschaulichten Wechselrichter oder Umrichter der Servomotor 4 angeschlossen sein, der zum Antrieb des Stößels 3 dient. Alle weiteren Servomotoren der Zieheinrichtung, des Stößelantriebs oder sonstiger Aggregate können ebenfalls an den Gleichspannungszwischenkreis 68 angeschlossen sein, wobei die jeweils gelieferten Ströme über Stromsensoren 70, 71 erfasst und an die Steuereinheit 67 gemeldet werden. Der Gleichspannungszwischenkreis 68 ist über einen Gleichrichter 72 vom Netz gespeist und außerdem vorzugsweise durch einen Schwungradspeicher 73 gepuffert. Letzterer dient zur Vergleichmäßigung der Leistungsaufnahme der Tiefziehpresse 1 und zur Zwischenpufferung von Bremsenergie, die von den Servomotoren rückgeliefert werden kann.

Die insoweit beschriebene Tiefziehpresse 1 arbeitet wie folgt:
In Betrieb der Tiefziehpresse 1 wird zunächst ein flaches Blech, d.h. die Platine 13, auf den Blechhaltering 14 gelegt. Sodann wird der Stößel 3 durch Ansteuerung der Servomotoren 4, 5 nach unten bewegt, um den oberen Werkzeugteil 10 auf die Platine 13 aufsetzen zu lassen. Diese wird von dem Blechhaltering 14 zunächst oberhalb des Werkzeugteils 12 gehalten. Kurz bevor der schnell bewegte obere Werkzeugteil 10 auf der Platine 13 aufsetzt, werden die Servomotoren 24, 25 aktiviert, um den Blechhaltering 14 nach unten zu bewegen und somit die Relativgeschwindigkeit zwischen dem oberen Werkzeugteil 10 und der Platine 13 zu minimieren. Der obere Werkzeugteil 10 setzt sanft auf der Platine 13 auf und drückt diese gegen den Blechhaltering. Nunmehr drückt dieser über die Druckstifte 15, 16 auf den Druckkasten 17. Die Servomotoren 24, 25 fangen nun an, eine Gegenkraft zu entwickeln, indem sie die Abwärtsbewegung mehr oder weniger heftig bremsen. Diesen Vorgang steuert die Steuereinheit 67, die zuvor auch die Vorbeschleunigung der Servomotoren 24, 25 gesteuert hat. Die nunmehr im Bremsbetrieb laufenden Servomotoren 24, 25 liefern Strom, der über den bidirektionalen Wechselrichter 69 in den Gleichspannungszwischenkreis 68 rückgespeist wird. Gleichzeitig überwacht die Steuereinheit 67 den in der hydraulischen Überlastsicherung 60 gemessenen Druck, der die an den einzelnen Gewindespindeln auftretenden Kräfte und somit die auf den Blechhaltering 14 ausgeübte Kraft kennzeichnet. Der Motorstrom der Servomotoren 24, 25 wird nun entsprechend einem gewünschten Kraftprofil (Sollkraft abhängig vom Stößelweg) reguliert.

Ist der Tiefziehvorgang beendet, werden die Servomotoren 24, 25 reversiert und fahren den Druckkasten 17 und mit diesem den Blechhaltering 14 und das erzeugte Blechteil kontrolliert nach oben. Es wird weiter transportiert und eine neue Platine 13 aufgelegt.

Wenn bei dem vorbeschriebenen Prozess ein Überlastfall auftritt, öffnet das Druckbegrenzungsventil, das der betroffenen Überlastsicherung 60 zugeordnet ist. Damit kann die Gewindespindel eine Ausweichbewegung vollführen, die die Kraftspitze abbaut. zugleich wird aber der Gegendruck in dem Arbeitsraum 66 aufrecht erhalten und somit auch über die Gewindespindel und die Gewindemutter der Servomotor weiter beschleunigt.

Die Steuereinheit 67 kann auf die beschriebene Weise die von den Servomotoren 24; 25 erzeugte Gegenkraft feinfühlig regulieren. Außerdem wird ein hohes Maß an Energierückgewinnung ermöglicht. Beides hängt entscheidend von der hydrostatischen Lagereinrichtung 38 ab, über die sich die Gewindemutter 22 an der Gewindespindel 20 abstützt. Die Funktion ist wie folgt:

In Betrieb sind die Taschen 44 bis 48 mit unter Druck stehendem Öl beaufschlagt. Die Fläche der Taschen 46 bis 48 ist jeweils so groß bemessen, dass bei gegebenem Öldruck die gewünschte Kraft erzeugt wird. Damit wird beispielsweise der Gewindegang des Gewindes 39 zwischen den Taschen 46, 47 fixiert. Auf beiden Seiten, d.h. an beiden Flanken 40, 41, bilden sich mit den entsprechenden Flächen der Gewindemutter 22 Spalte, durch die das Öl aus den Taschen 46, 47 in die benachbarten Ölfangkanäle strömen kann. Nachdem dieser Abfluss spaltweitenabhängig ist, stellt sich durch einen Selbstreguliereffekt die Position des Gewindegangs des Gewindes 39 in der Mitte des Innengewindes der Gewindemutter 22 ein. Axialkräften, die die Gewindemutter 22 und die Gewindespindel 20 in Axialrichtung gegeneinander spannen, werden auf diese Weise berührungslos von den in den Taschen 46, 47 vorhandenen Ölpolstern übertragen. Die Steifigkeit der so gebildeten Axialverbindung ist groß. Stoßvorgänge werden gut gedämpft. Bezüglich einer Relativdrehung ist äußerst geringe Reibung zu verzeichnen. Damit bildet der Spindelgewindetrieb 18 ein nicht selbsthemmendes Getriebe, über das sowohl der Antrieb des Druckkastens 17 durch den Servomotor 24 (und die anderen Servomotoren) sowie auch umgekehrt der Antrieb der im Generatorbetrieb laufenden Servomotoren durch den Druckkasten 17 möglich ist. Durch die geringe Reibung und fehlende Selbsthemmung der Spindelmutter 22 auf der Gewindespindel 20 wird eine hohe Regelgüte und ein guter Wirkungsgrad erreicht.

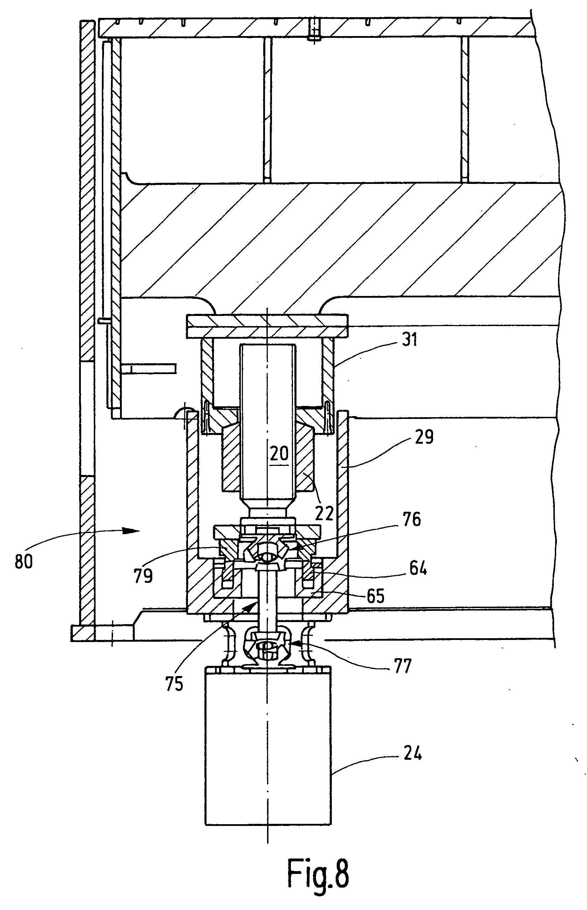

In Figur 8 ist eine abgewandelte Ausführungsform der Zieheinrichtung veranschaulicht. Soweit nichts anderes ausgeführt ist, stimmt sie mit der vorstehend beschriebenen Zieheinrichtung überein. Es gilt die vorige Beschreibung unter Zugrundelegung gleicher Bezugszeichen entsprechend. Abweichend von dem vorbeschriebenen Ziehkissen 17 ist bei dem Ziehkissen 17' nach Figur 8 der Servomotor 24 an dem Träger 26 starr gelagert. Sein Abtrieb ist mit der Gewindespindel 20 über eine Gelenkwelle 75 verbunden. Diese weist zumindest ein, vorzugsweise aber zwei Gelenke 76, 77, z.B. in Form von Kardangelenken auf, die ein Schwenken und ein seitliches Versetzen der Gewindespindel 20 gegen den Antriebsmotor 24 gestatten. Zur Entkopplung der Neigebewegung des Druckkastens von der Gewindespindel kann die Gewindemutter 22 an ihrer Oberseite eine sphärische Fläche aufweisen, der eine sphärische Anlagefläche eines Gegenelements 78 zugeordnet ist.

Die axiale Abstützung der Gewindespindel 20 kann wie weiter oben beschrieben erfolgen. Es ist jedoch zweckmäßig, dem Kolben 64 in dem Zylinder 65 nicht nur eine Axialbewegung sondern auch eine Kippbewegung zu ermöglichen. Der maximale Kippwinkel des Kolbens 64 ist dann vorzugsweise wenigstens etwas größer als der maximale Kippwinkel der Gewindespindel 20. Dies kann durch entsprechende Nachgiebigkeit seiner Dichtungen erreicht werden. Zur Entkopplung eines seitlichen Versatzes kann der Kolben 65 an seiner Oberseite eine z.B. ebene Ringfläche aufweisen, auf der ein seitlich zumindest etwas verschiebbarer Stützring 79 aufliegt.

Anstelle der Gelenkwelle kann auch eine Kupplung oder ein flexibles Element oder eine Kombination derselben Verwendung finden, die oder das drehsteif, in Quer- und Neigerichtung und gegebenenfalls auch in Axialrichtung jedoch zumindest etwas beweglich ist. Wie die Gelenkwelle bildet dann die Kupplung oder das flexible Element eine Entkopplungseinrichtung 80 zur Übertragung der Antriebsbewegung des ruhenden Servomotors 24 auf die Gewindespindel, die Neigerichtung und gegebenenfalls auch seitlich (in Radialrichtung) etwas beweglich ist. Eine gewisse Beweglichkeit in Axialrichtung nach Art einer Schiebewelle ermöglicht es der Gewindespindel 20 bei Überlast mit dem Kolben 65 eine vertikale Ausgleichsbewegung zu vollführen.

Eine Tiefziehpresse 1 weist ein Ziehkissen 17 auf, das durch Spindelgewindetriebe 18, 19 von Servomotoren 24, 25 oder ähnlichen Antrieben mit einer der Stößelbewegung entgegen gerichteten Kraft beaufschlagbar ist. Die Spindelgewindetriebe 18, 19 sind mit hydrostatischen Lagereinrichtungen 38 zur Lagerung der jeweiligen Spindelmutter 22 auf der jeweiligen Gewindespindel 20 versehen.

## Patentansprüche

1. Zieheinrichtung für eine Presse (1) oder Pressenanlage, insbesondere für die Ziehpresse einer Großteil-Stufenpresse,
mit mindestens einer Antriebseinrichtung (24) zur Ausübung einer der Stößelbewegung entgegen gerichteten Kraft auf zumindest eine Komponente (14) eines Tiefziehwerkzeugs (11),
wobei die Antriebseinrichtung (24) über einen Spindelgewindetrieb (18) auf die Komponente (14) des Tiefziehwerkzeugs (11) wirkt,
wobei der Spindelgewindetrieb (18) eine Gewindespindel (20) und zumindest eine Gewindemutter (22) aufweist, die mit einer hydrostatischen Lagereinrichtung (38) versehen sind.

2. Zieheinrichtung nach Anspruch 1, **dadurch gekennzeichnet, dass** die Antriebseinrichtung (24) zumindest einen Servomotor (24) aufweist.

3. Zieheinrichtung nach Anspruch 1, **dadurch gekennzeichnet, dass** die Gewindespindel (18) drehbar und die Gewindemutter (22) unverdrehbar gelagert ist.

4. Zieheinrichtung nach Anspruch 1, **dadurch gekennzeichnet, dass** die Gewindemutter (22) mit unter Druck stehendem Fluid beaufschlagte Lagertaschen (46, 47, 48, 49) aufweist.

5. Zieheinrichtung nach Anspruch 1, **dadurch gekennzeichnet, dass** den Lagertaschen (46, 47, 48, 49) benachbart Sammelund Rückführungskanäle (50, 51) für das Hydraulikfluid angeordnet sind.

6. Zieheinrichtung nach Anspruch 1, **dadurch gekennzeichnet, dass** die Gewindespindel (20) schwenkbar gelagert ist.

7. Zieheinrichtung nach Anspruch 2 und 5, **dadurch gekennzeichnet, dass** zur Lagerung der Gewindespindel (20) ein Träger (26) vorgesehen ist, an dem die Gewindespindel (20) und der angeschlossene Servomotor (24) schwenkbar gelagert sind, wobei der Servomotor (24) mit dem Trägerelement (26) drehfest verbunden ist.

8. Zieheinrichtung nach Anspruch 1, **dadurch gekennzeichnet, dass** die Gewindemutter (22) über ein Druckrohr (31) mit einem Druckkasten (17) verbunden ist, an dem sich die mit der gewünschten Kraft zu beaufschlagende Komponente (14) abstützt.

9. Zieheinrichtung nach Anspruch 1, **dadurch gekennzeichnet, dass** die Gewindemutter (22) oder die Gewindespindel (20) über eine Überlastsicherung (60) abgestützt ist.

10. Zieheinrichtung nach Anspruch 1, **dadurch gekennzeichnet, dass** die Überlastsicherung (60) eine hydraulische Einrichtung enthält.

11. Zieheinrichtung nach Anspruch 1, **dadurch gekennzeichnet, dass** die Gewindespindel (20) schwenkbar gelagert ist.

12. Zieheinrichtung nach Anspruch 1, **dadurch gekennzeichnet, dass** die Antriebseinrichtung (24) mit der Gewindespindel (20) über eine Entkopplungseinrichtung (80) drehfest verbunden ist.

13. Zieheinrichtung nach Anspruch 10, **dadurch gekennzeichnet, dass** die Überlastsicherung (60) einen mit Hydraulikfluid gefüllten Hydraulikzylinder (65) aufweist, der bei Überlast über ein Überdruckventil leerbar ist.

14. Zieheinrichtung nach Anspruch 13, **dadurch gekennzeichnet, dass** das Überdruckventil, wenn es anspricht, einen Solldruck in dem Hydraulikzylinder (65) bestehen lässt.

15. Zieheinrichtung nach Anspruch 10, **dadurch gekennzeichnet, dass** die hydraulische Einrichtung mit einem Drucksensor zur Lasterfassung verbunden ist.

16. Zieheinrichtung nach Anspruch 2, **dadurch gekennzeichnet, dass** der Servomotor (24) ein Torquemotor ist.

17. Zieheinrichtung nach Anspruch 16, **dadurch gekennzeichnet, dass** der Motorstrom zur Kraftkontrolle überwacht wird.

18. Zieheinrichtung nach Anspruch 2, **dadurch gekennzeichnet, dass** der Motorstrom des Servomotors (24) anhand des in einer hydraulischen Überlastsicherung (60) erfassten Hydraulikdrucks reguliert wird.

19. Zieheinrichtung nach Anspruch 2, **dadurch gekennzeichnet, dass** der Servomotor (24) über einen gesteuerten Wechselrichter (69) mit einem Gleichspannungs-Zwischenkreis (68) verbunden ist, der auch einen Stößelantrieb (4) speist.

20. Zieheinrichtung nach Anspruch 19, **dadurch gekennzeichnet, dass** an den Gleichspannungs-Zwischenkreis (68) ein Energiespeicher (73) angeschlossen ist.

21. Zieheinrichtung nach Anspruch 20, **dadurch gekennzeichnet, dass** der Energiespeicher (73) ein Schwungradspeicher ist.
